# FASCICULE DE BREVET EUROPEEN

(11) **EP 2 499 720 B1**
(45) Date de publication et mention de la délivrance du brevet: **13.11.2013**
(21) Numéro de dépôt: 10782339.5
(22) Date de dépôt: 08.10.2010
(51) Int. Cl.: H02K 3/32, H02K 3/52

(54) **ROTOR A GRIFFES EQUIPE D'UN ISOLANT D'UN BOBINAGE D'EXCITATION ET D'AIMANTS ET MACHINE ELECTRIQUE TOURNANTE EQUIPEE D'UN TEL ROTOR**
KLAUENROTOR MIT FELDSPULENISOLIERUNG UND MAGNETEN SOWIE ELEKTRISCHE DREHMASCHINE MIT EINEM DERARTIGEN KLAUENROTOR
CLAW ROTOR PROVIDED WITH FIELD COIL INSULATION AND MAGNETS, AND ROTATING ELECTRICAL MACHINE PROVIDED WITH SUCH A ROTOR

(30) Priorité: 13.11.2009 FR 0957988
(43) Date de publication de la demande: 19.09.2012
(73) Titulaire: Valeo Equipements Electriques Moteur, 94046 Créteil Cedex (FR)
(72) Inventeur: LEROY, Virginie, F-93330 Neuilly sur Marne (FR); FOVEAU, Vincent, F-75012 Paris (FR)
(74) Mandataire: Gamonal, Didier
(86) Numéro de dépôt international: PCT/FR2010/052132
(87) Numéro de publication internationale: WO 2011/058254

(56) Documents cités:
- WO-A1-96/11523
- JP-A- 2002 223 551
- US-A1- 2003 137 208

## Description

### Domaine de l'invention

L'invention concerne un rotor à griffes doté d'un isolant d'un bobinage d'excitation et d'aimants permanents et une machine électrique tournante équipée d'un tel rotor.

### Etat de la technique

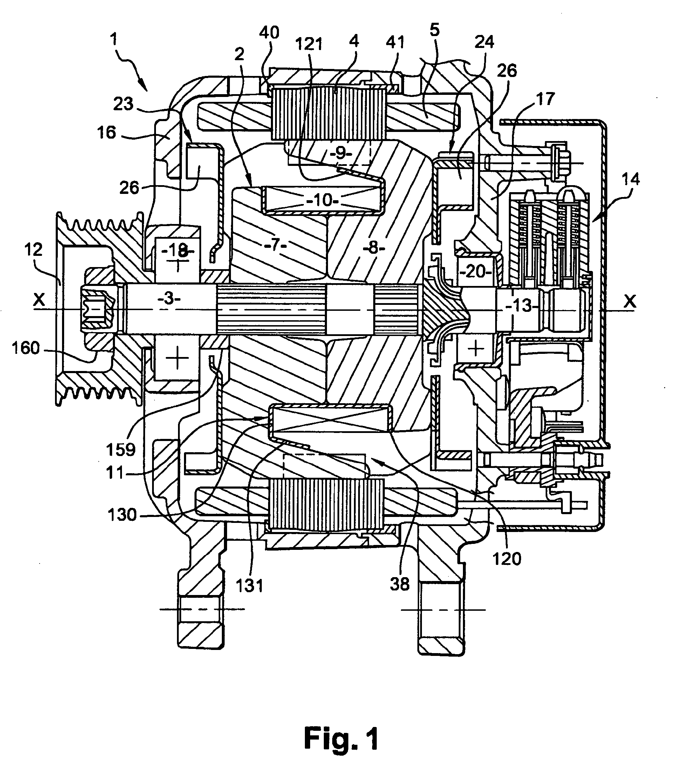

De nombreuses machines électriques tournantes sont équipées d'un rotor à griffes doté d'un isolant d'un bobinage d'excitation et d'aimants permanents.
A la figure 1, on décrit ci-après une telle machine sous la forme d'un alternateur compact et polyphasé, notamment pour véhicule automobile. Cet alternateur transforme de l'énergie mécanique en énergie électrique et peut être réversible. Un tel alternateur réversible est appelé alterno-démarreur et dans un autre mode de fonctionnement transforme de l'énergie électrique en énergie mécanique notamment pour démarrer le moteur thermique du véhicule.

Cet alternateur comporte essentiellement un carter 1 et, à l'intérieur de celui-ci, un rotor 2 à griffes, solidaire en rotation de manière directe ou indirecte d'un arbre 3, et un stator 4, qui entoure le rotor avec présence d'un faible entrefer. L'axe X-X de l'arbre 3 constitue l'axe de rotation et de symétrie axiale de la machine électrique tournante et donc l'axe du rotor 2. Dans la suite de la description les orientations radiale, transversale et axiale sont à considérer par rapport à cet axe X-X.
Le stator 4 comporte un corps en forme d'un paquet de tôles doté d'encoches, ici du type semi fermé, équipées d'isolant d'encoches pour le montage des phases du stator, comportant chacune au moins un enroulement traversant les encoches du corps du stator et formant un chignon 5 de part et d'autre du corps du stator.

Les enroulements sont obtenus par exemple à partir d'un fil continu recouvert d'émail ou à partir d'éléments conducteurs en forme de barre, tels que des épingles reliées entre elles par exemple par soudage.

Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR A 2 745 445 (US A 6 002 219).

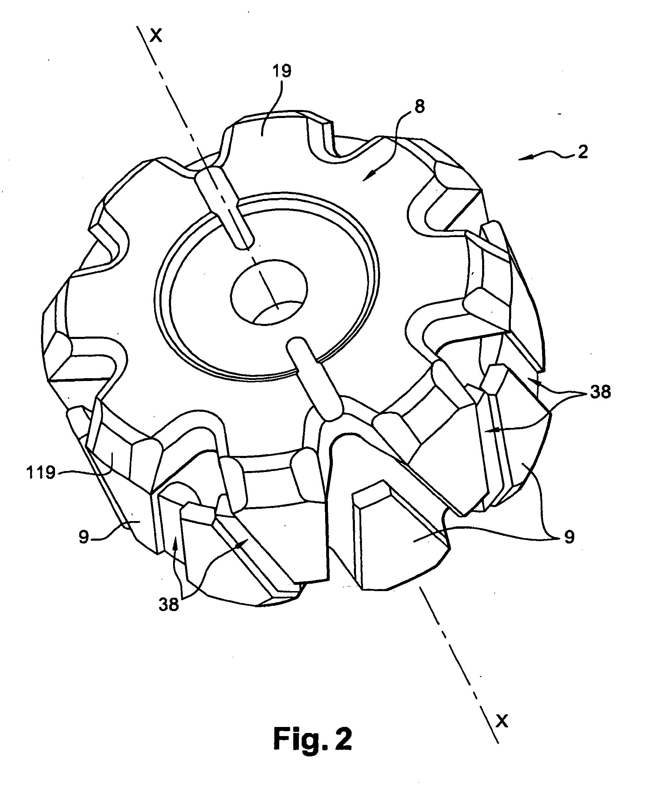

Le nombre de phases dépend des applications et peut être supérieur à trois, un ou deux ponts redresseurs pouvant être prévus comme dans le document EP 0 881 752.
Le rotor à griffes 2 (figure 1 et 2) comporte deux roues polaires 7, 8 axialement juxtaposées et de forme annulaire. Chaque roue 7, 8 présente un flasque d'orientation transversale pourvu à sa périphérie externe de dents 9 de forme trapézoïdale et d'orientation axiale. Les dents 9 d'une roue sont dirigées axialement vers le flasque de l'autre roue ; la dent d'une roue polaire pénétrant dans l'espace existant entre deux dents 9 adjacentes de l'autre roue polaire, de sorte que les dents des roues polaires soient imbriquées.
La périphérie externe des dents 9 est d'orientation axiale et définie avec la périphérie interne du corps du stator l'entrefer entre le stator 4 et le rotor 2.
La périphérie interne des dents 9 est inclinée. Ces dents 9 sont moins épaisses à leur extrémité libre.
Les flasques des roues 7, 8 sont de forme annulaire et présentent à leur périphérie externe (Figure 2) des saillies radiales 19 raccordées par des chanfreins 119 aux dents 9. Ces saillies 19 forment des griffes avec les dents 9. Le nombre de dents et de saillies dépend des applications et notamment du nombre de phases du stator. A la figure 2 il est prévu huit dents par roue polaire. En variante chaque roue 7,8 comporte six ou sept dents.

Un noyau cylindrique est intercalé axialement entre les flasques des roues 7,8. Ici ce noyau consiste en deux demi noyaux appartenant chacun à l'un des flasques.
Ce noyau porte à sa périphérie externe un bobinage d'excitation 10 bobiné dans un isolant 11 intercalé radialement entre le noyau et ce bobinage 10.
Cet isolant 11 supporte le bobinage 10. Il est visible dans le document EP 0881 752 (figure 1) et est décrit par exemple dans le document FR 2 612 349.
Il est en matière électriquement isolante et moulable, telle que de la matière plastique, tandis que les roues polaires 7, 8 et le noyau sont métalliques en étant ici en matière ferromagnétique, telle que de l'acier doux. L'arbre 3 est également métallique en étant en matériau ferromagnétique, tel que de l'acier, plus dur que les roues polaires et le noyau du rotor.à griffes
L'isolant 11 est en forme de bobine. Il comporte un moyeu tubulaire 110 d'orientation axiale aux extrémités duquel sont ménagés deux joues annulaires 120, 130 perpendiculaires au moyeu. Le moyeu 110 est monté sur le noyau du rotor 2. La périphérie interne du moyeu est en contact intime avec la périphérie externe du noyau. Les joues 120, 130, d'orientation transversale, sont adjacentes aux saillies 19 des flasques respectivement de la roue 8 et de la roue 7. Un faible jeu axial existe entre les joues de l'isolant 11 et les flasques pour ménager le bobinage 10. En variante les joues sont en contact avec les saillies. La taille des joues dépend de la hauteur des saillies 19 et du bobinage 10 et donc du nombre de spires de ce bobinage.
Le moyeu 110 permet d'isoler électriquement le bobinage 10 par rapport au noyau du rotor 2, tandis que les joues 120, 130 permettent d'isoler électriquement le bobinage 10 par rapport aux flasques des roues polaires 7, 8.
La périphérie externe de chaque joue 120, 130 comporte une pluralité de pétales saillants respectivement 121, 131 plus larges circonférentiellement que la base des dents. L'une des joues présente des moyens de connexion des extrémités du fil électriquement conducteur bobiné dans l'isolant 11, comme visible dans les figures 3, 6 et 8 de ce document FR 2 612 349. Les pétales sont déployés et globalement d'orientation radiale à l'état libre c'est-à-dire avant montage de l'isolant 11 entre les flasques des roues 7, 8. Ils sont légèrement inclinés axialement à l'état libre comme visible également dans la figure 2 du document US 2003/0137208 conforme au préambule de la revendication 1.
Ces pétales 121, 131 sont repliés lors du montage de l'isolant sur le noyau du rotor 2 pour coopérer avec la périphérie interne des dents 9 des roues polaires afin d'isoler électriquement le bobinage 10 par rapport aux dents 9 et aux saillies 19. Grâce aux pétales le bobinage 10 peut présenter dans une réalisation une forme de tonneau comme représenté en pointillé à la figure 1.

Le carter 1 porte intérieurement à sa périphérie externe le stator 4 et centralement à rotation l'arbre 3. Ce carter comporte ici deux flasques 16, 17 ajourés appelés palier avant et palier arrière. Le palier avant 16 est adjacent à une poulie 12, tandis que le palier arrière 17 porte le porte-balais, le régulateur de tension et au moins un pont redresseur. Les paliers sont de forme creuse et portent chacun centralement un roulement à billes respectivement 18 et 20 pour le montage à rotation de l'arbre 3 du rotor 2. Le diamètre du roulement 18 est supérieur à celui du roulement 20.

La poulie 12 est fixée sur l'extrémité avant de l'arbre 3 ici à l'aide d'un écrou 160 en appui sur le fond de la cavité de cette poulie 12. Cette poulie 12 comporte une douille en contact avec la bague interne du roulement 18. Une entretoise 159 annulaire est intercalée axialement entre la face frontale de la roue polaire avant 7 et la bague interne du roulement 18. L'arbre 3 traverse l'entretoise 159 et la douille de la poulie 12.

A la figure 1, il est prévu à la périphérie externe du corps du stator 4 un système élastique pour filtrer les vibrations, avec à l'avant un joint plat 40 et à l'arrière des tampons 41, de la résine souple et thermoconductrice étant intercalée entre le palier avant et le corps du stator pour évacuer la chaleur. En variante les paliers 16, 17 portent rigidement le corps du stator 4 sans présence du joint 40 et des tampons 41.

L'alternateur de la figure 1 est un alternateur à ventilation interne, qui comporte, comme dans le document EP 0 881 752, des paliers avant 16 et arrière 17 avec des ouvertures d'entrée d'air et de sortie d'air pour permettre le refroidissement de l'alternateur par circulation d'air engendrée par la rotation d'au moins d'un ventilateur interne solidaire de l'une des extrémités axiales du rotor 2. Ici il est prévu un ventilateur 23 sur la face frontale avant du rotor et un autre ventilateur 24, plus puissant ici obtenu par la superposition de deux ventilateurs élémentaires à pales décalées circonférentiellement, sur la face dorsale arrière du rotor, chaque ventilateur étant pourvu d'une pluralité de pales 25, 26.

En variante l'alternateur comporte un ventilateur externe adjacent à la poulie comme dans le document DE 30 08 454. En variante l'alternateur est refroidi par circulation d'un fluide, tel que l'eau de refroidissement du moteur thermique du véhicule, circulant dans un canal ménagé dans le carter 16, 17.
L'extrémité avant de l'arbre 3 porte la poulie 12 appartenant à un dispositif de transmission de mouvements à au mois une courroie entre l'alternateur et le moteur thermique du véhicule automobile, tandis que l'extrémité arrière 13 de diamètre réduit de l'arbre 3 porte des bagues collectrices reliées par des liaisons filaires aux extrémités du bobinage 10. Les liaisons filaires et les bagues collectrices appartiennent ici à un collecteur du type de celui décrit dans le document FR 2 710 197. Des balais appartenant à un porte-balais 14 sont disposés de façon à frotter sur les bagues collectrices. Le porte-balais est relié à un régulateur de tension.
Lorsque le bobinage d'excitation 10 est alimenté électriquement à partir des balais, le rotor 2 est magnétisé et devient un rotor inducteur avec formation de pôles magnétiques Nord-Sud au niveau des griffes et donc des dents des roues polaires.

Ce rotor inducteur 10 crée un courant induit alternatif dans le stator induit lorsque l'arbre 3 tourne, le ou les ponts redresseurs permettant de transformer le courant alternatif induit en un courant continu, notamment pour alimenter les charges et les consommateurs du réseau de bord du véhicule automobile, ainsi que pour recharger la batterie dudit véhicule.

Les performances, à savoir la puissance et le rendement, de la machine électrique tournante peuvent encore être augmentées en utilisant un rotor à griffes présentant la configuration selon la figure 2. Ce rotor comporte des aimants permanents 38 disposés de manière symétrique par rapport à l'axe X-X du rotor et interposés entre deux dents 9 adjacentes à la périphérie externe du rotor. Ces aimants 38 sont appelés aimant interpolaires car ils interviennent entre deux dents consécutives appartenant à l'une et à l'autre des roues polaires.

A la figure 2 il est prévu quatre paires d'aimants 38 pour huit paires de pôles. En variante le nombre d'aimants est égal au nombre de paires de pôles.

Un tel aimant a été représenté à la figure 1 et est également visible à la figure 1 du document EP 0881 752.

La solidarisation de l'arbre 3 avec les roues 7,8 est réalisée directement à la figure 1 par emmanchement à force de portions moletées saillantes de l'arbre 3 plus dur dans les alésages internes des roues 7, 8. L'arbre 3 présente également une portion intermédiaire lisse entre les deux portions moletées. L'une des portions moletées sert également à la fixation de l'entretoise 159.
On presse les demi noyaux des roues 7,8 l'une contre l'autre pour un bon passage du flux magnétique.
Dans d'autres documents le montage de l'arbre est réalisé par déformation et fluage de matière.

Par exemple dans le document DE 300 84 54 (figure 4) l'arbre présente deux gorges avec un fond à stries axiales. La matière des flasques des roues polaire est déformée pour fluer dans les stries des gorges.

Dans le document WO 2008/031995 il en est de même mais des mesures constructives ont été prises pour faciliter les usinages, ménager les zones de montage des roulements 18, 20 et diminuer le diamètre de l'extrémité arrière de l'arbre 3.

Dans les figures 1 à 7 du document DE 300 84 54 le noyau du rotor est en une seule partie intercalée axialement entre les deux flasques des roues polaires, tandis que dans le document WO 2008/031995 le noyau est en deux parties et les stries sont plus longues.

Dans une autre réalisation, décrite dans le document WO 2006/103361, on monte indirectement les roues polaires sur l'arbre à l'aide d'un manchon intermédiaire ou d'un noyau épaulé doté de portées de montage des flasques de ces roues. On emmanche à force au moins un tronçon moleté de l'arbre dans l'alésage interne du manchon intermédiaire ou du noyau épaulé, puis on fixe respectivement les roues sur le manchon ou les flasques des roues sur le noyau par exemple (Figures 3 et 5 de ce document) par soudage ou par sertissage.

Dans le document FR 2 612 349, on emmanche dans une première étape une première des roues polaires sur l'arbre, puis dans une deuxième étape on monte l'isolant équipé de son bobinage d'excitation sur le demi noyau et enfin dans une troisième étape on emmanche la deuxième roue polaire sur la portion moletés de l'arbre.

Une solution pour le montage des aimants, comme décrit par exemple dans les demandes FR 2 793 085 et FR 2 784 248, consiste à monter ceux-ci après la fixation sur l'arbre du rotor équipé de son bobinage d'excitation car dans ce cas les pétales sont déjà pliés en sorte qu'aucune interférence entre les pétales et les aimants n'est à craindre lorsque l'on monte les aimants dans des gorges usinées en final.

Un problème se pose lorsque l'on monte par avance les aimants sur l'une des roues polaires, comme décrit à la page 10 du document WO 2008/031995, car les pétales sont initialement déployés.

Plus précisément comme indiqué dans les pages 23 et 24 de ce document WO 2008/031995, on usine par avance les gorges de montage des aimants, l'alésage interne et la périphérie externe des roues polaires et ce avec des outils lubrifiés sans risque de projection de copeaux sur le bobinage 10 non présent à ce stade

Après on monte l'isolant avec son bobinage sur les demi noyaux des roues polaires, puis, suite à un positionnement angulaire des deux roues par exemple à l'aide de doigts interposés de manière temporaire entre les saillies de la roue polaire concernée, on presse à l'aide d'une presse de compactage l'un contre l'autre les demi noyaux pour un bon passage du flux magnétique. Ensuite on emmanche l'arbre dans les alésages centraux des roues polaires sans destruction du positionnement angulaire des roues polaires et enfin à l'aide d'un outil on déforme la matière des roues polaires pour pénétration dans les zones de sertissage à stries de l'arbre.

Ainsi on monte les aimants dans une gorge débouchante ou non d'une première roue polaire, puis on amène la deuxième roue polaire dans la bonne position angulaire, sachant que l'on peut faire tourner sans difficulté cette roue. Lors de cette étape on rapproche axialement la deuxième roue polaire par rapport à la première roue polaire en sorte que les extrémités des aimants, portés par la première roue polaire, peuvent venir en contact avec les pétales déployés de la joue associée à la deuxième roue polaire, qui est alors éloignée axialement de la première roue polaire.

Plus précisément les extrémités des dents de la deuxième roue polaire viennent, via leur périphérie interne inclinée, progressivement en contact avec les pétales de la joue associée à la deuxième roue pour rabattre et donc replier, les pétales de cette joue. Ces pétales peuvent donc interférer avec les aimants de la première roue ce qui peut conduire à mettre les aimants en biais en sorte que ceux-ci risquent de casser par la suite lorsque l'on continue à rapprocher axialement les deux roues polaires l'une de l'autre ou lorsque l'on met en contact intime sous pression, lors de l'opération de compactage, les deux demi noyaux des roue polaires.
Pour éviter cela on peut songer à diminuer la taille des pétales pour éviter toute interférence avec les aimants lors du rapprochement axial des deux roues polaires l'une par rapport à l'autre.
Cette solution n'est pas satisfaisante car cela est réalisé au détriment de l'isolation du bobinage d'excitation.

### Objet de l'invention

La présente invention a pour objet de satisfaire à ces deux solutions contradictoires.

Un but de l'invention est donc d'éviter toute interférence entre les pétales et les aimants permanents.

Un autre but de l'invention est donc de bien isoler le bobinage d'excitation.

Suivant l'invention un rotor à griffes du type sus indiqué est caractérisé en ce qu'au moins les pétales d'une joue associés aux aimants permanents sont en plusieurs parties à savoir un pétale principal pour venir en contact avec la périphérie interne d'une dent de la roue polaire concernée et être plié pendant le montage de l'isolant sur le noyau et au moins un pétale secondaire adjacent, étant avant le dit montage moins haut, vu dans le sens radial, que le pétale principal.
Suivant l'invention une machine électrique tournante est caractérisée en ce qu'elle est équipée à fixation d'un tel rotor à griffes.
Grâce à l'invention le pétale principal plie lors de l'emmanchement de l'isolant du bobinage d'excitation dans la roue polaire, tandis que le pétale secondaire ne plie pas et protège le bobinage d'excitation sans interférer avec l'aimant concerné.
En outre ces pétales scindés sont plus faciles à plier que les autres pétales.
De plus on peut augmenter l'épaisseur de l'extrémité libre des dents, qui portent les aimants, pour augmenter la robustesse de ces dents et avoir ainsi une meilleure tenue à la force centrifuge.
De même on peut diminuer la taille de la machine électrique tournant, notamment le diamètre externe du rotor à griffes.
Cette solution permet aussi un montage des aimants dans un support porté par la dent concernée car aucune interférence entre le pétale scindé et le support de l'aimant n'est à craindre.
Selon une caractéristique une fente intervient entre le pétale secondaire et le pétale principal.
Cette disposition permet une meilleure désolidarisation du pétale secondaire par rapport au pétale principal en sorte que le pliage du pétale principal n'entraîne pas le pilage du pétale secondaire.
Dans un mode de réalisation tous les pétales d'une joue sont scindés en deux parties.
Cette disposition favorise un pliage homogène des pétales.
Dans une autre forme de réalisation les pétales des deux joues sont des pétales scindés.
Cette disposition permet d'éviter les erreurs de montage concernant la position des joues.
En effet dans un mode de réalisation on peut conserver les pétales d'une joue et modifier les pétales de l'autre joue. Il faut alors ne pas se tromper de joue.
En outre cela permet de monter les aimants sur l'une ou l'autre des roues polaires.
D'autres buts, caractéristiques, détails et avantages de l'invention apparaîtront plus clairement au cours de la description explicative qui va suivre faite en référence aux dessins annexés donnés uniquement à titre d'exemple illustrant des modes de réalisation de l'invention

### Brève description des dessins

- la figure 1 est une vue en coupe axiale d'une machine électrique tournante de l'état de la technique ;
- la figure 2 est une vue en perspective du rotor à griffes de la figure 1 équipés d'aimants permanents pour augmenter la puissance de la machine ;
- la figure 3 est une vue partielle en coupe transversale du montage de l'un des aimants interpolaires entre deux dents adjacentes appartenant respectivement à l'une et à l'autre des roues polaires dé la figure 2;
- la figure 4 est une vue partielle de dessus de deux dents adjacentes de la figure 2 avec une partie en coupe des dents pour montrer la forme des gorges de montage d'un aimant interpolaire;
- la figure 5 est une vue analogue à la figure 4 pour montrer une variante de réalisation de la forme d'une gorge de montage d'un aimant interpolaire;
- la figure 6 est une vue partielle en perspective montrant un pétale scindé selon l'invention ;
- la figure 7 est une vue en perspective d'un rotor à griffes selon l'invention sans sa roue polaire avant et sans ses aimants permanents pour mieux voir les pétales déployés de la joue avant de l'isolant du bobinage d'excitation et pour voir l'un des pétales scindé et pliés selon l'invention ;
- la figure 8 est une vue partielle à plus grande échelle de la figure 7 pour mieux voir la coopération d'un pétale de l'invention avec la périphérie interne d'une dent de la roue polaire arrière
- la figure 9 est une vue partielle en coupe axiale du rotor à griffes équipé de l'arbre de la figure 7 avant l'opération de sertissage du rotor sur la zone de sertissage avant de cet arbre.

### Description de modes de réalisation de l'invention

Dans les figures les éléments identiques seront affectés des mêmes signes de référence. De manière précitée les orientations radiale, transversale et axiale sont à considérer par rapport à l'axe X-X de la figure 1.

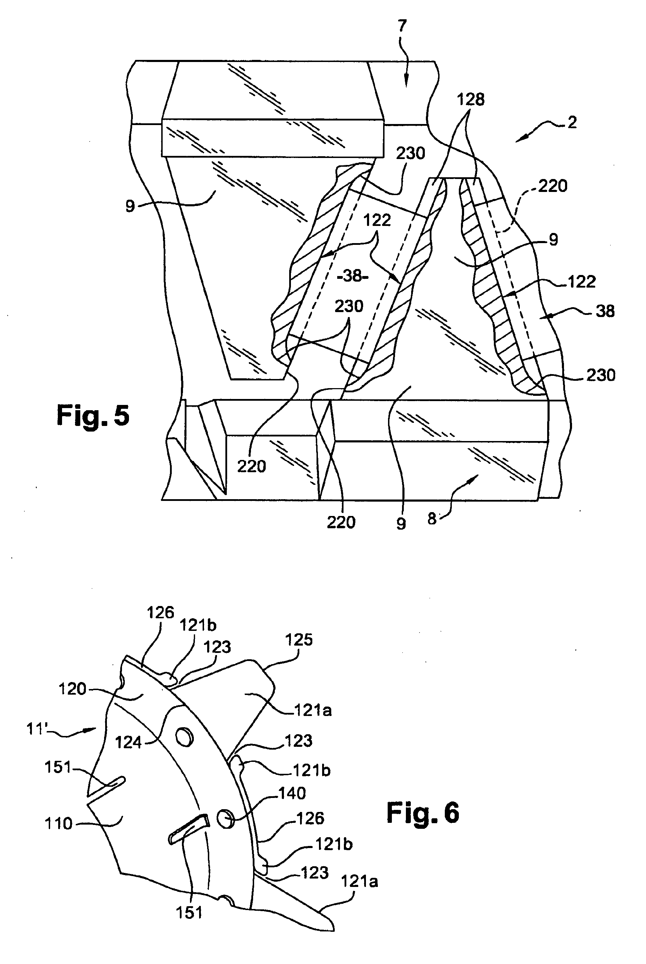

Dans les figures 6 à 8 l'isolant 11' selon l'invention se monte en lieu et place de l'isolant 11 de la figure 1; l'alternateur ou l'alterno-démarreur étant du type de celui indiqué dans l'état de la technique.

L'isolant 11' se monte donc sur le noyau du rotor à griffes 2 de forme annulaire et d'axe de symétrie axiale X-X et ce entre les deux flasques des roues polaires; une dent 9 d'un flasque d'une roue polaire étant dirigée vers le flasque de l'autre roue polaire.

L'isolant 11' de ces figures 6 à 8 a la même structure que l'isolant 11, c'est-à-dire qu'il est en matière électriquement isolante, ici en matière plastique, et qu'il est en forme de bobine présentant un manchon 110 cylindrique d'orientation axiale doté à chacune de ses extrémités axiales d'une joue 120, 130 d'orientation transversale comme à la figure 1.

Le manchon 110 se monte donc à centrage sur le noyau du rotor à griffes 2, tandis que les joues 120, 130 sont destinées chacune à être adjacente, voir à venir en contact avec l'un des flasques d'une roue polaire.

De préférence un faible jeu de montage existe entre les joues et les flasques des roues.

Le bobinage 10 est bobiné dans cet isolant 11', qui sert de support à ce bobinage.

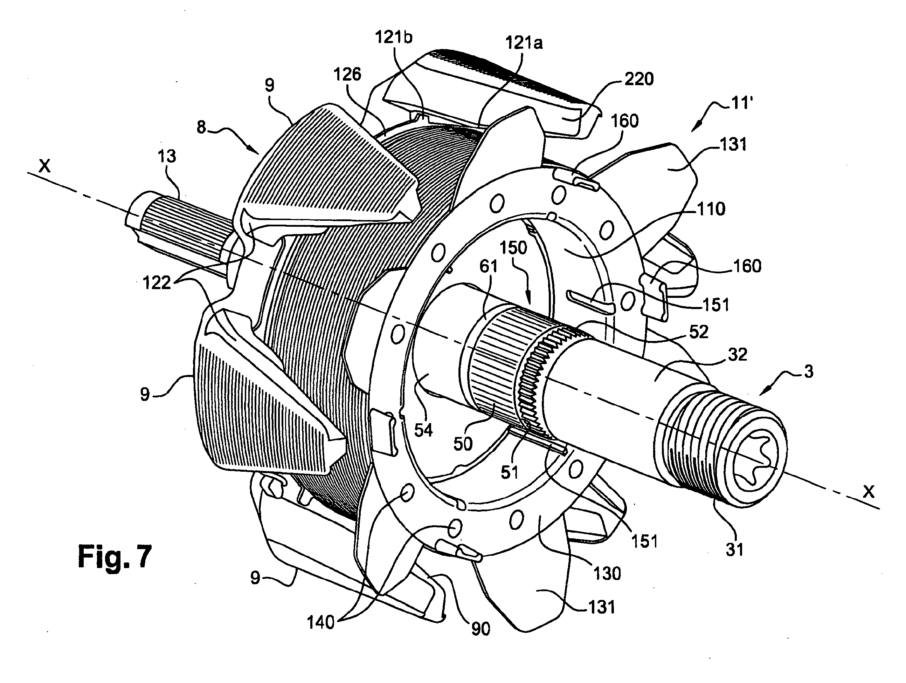

Dans les figures 6 et 7 les joues 120 et 130 présentent chacune une pluralité de trous 140, tandis que le manchon 110 présente une pluralité de rainures 151 borgnes décalées circonférentiellement pour fixation, par exemple à l'aide de résine ou autre colle, respectivement des joues 120, 130 sur le flasque et sur le demi noyau de la roue polaire 8,7 concernée.

A la figure 7 on voit en 160 des saillies d'orientation axiale appartenant à la joue 130 et destinées à coopérer avec la base de deux saillies 19 adjacentes de la roue polaire avant 7 pour blocage en rotation de l'isolant 11'.

Bien entendu ce blocage en rotation est effectué en variante comme dans le document FR 2 612 349 ; la périphérie interne du moyeu 110 et la périphérie externe des demi noyaux du rotor 2 étant de forme polygonale.

Chaque joue 120, 130 présente des pétales saillants, qui à l'état initial, c'est-à-dire à l'état libre, sont déployés et globalement d'orientation radiale. Ces pétales sont inclinés légèrement axialement initialement en direction de la roue polaire concernée comme visible à la figure 7. Les pétales sont conformés pour être retournés et repliés afin de venir en contact chacun avec la périphérie interne 90 d'une dent 9 du rotor 2. La largeur circonférentielle de la base d'un pétale est supérieure à la largeur circonférentielle de la saillie 19 adjacente.

Suivant l'invention certains au moins des pétales sont modifiés, de manière décrite ci-après, compte tenu de la présence des aimants permanents interpolaires 38 portés par les griffes 19, 9 de manière directe ou indirecte, par exemple via un support.

Les dents 9 d'orientation axiale à leur périphérie externe et de forme trapézoïdale, sont configurées pour le montage des aimants interpolaires 38.

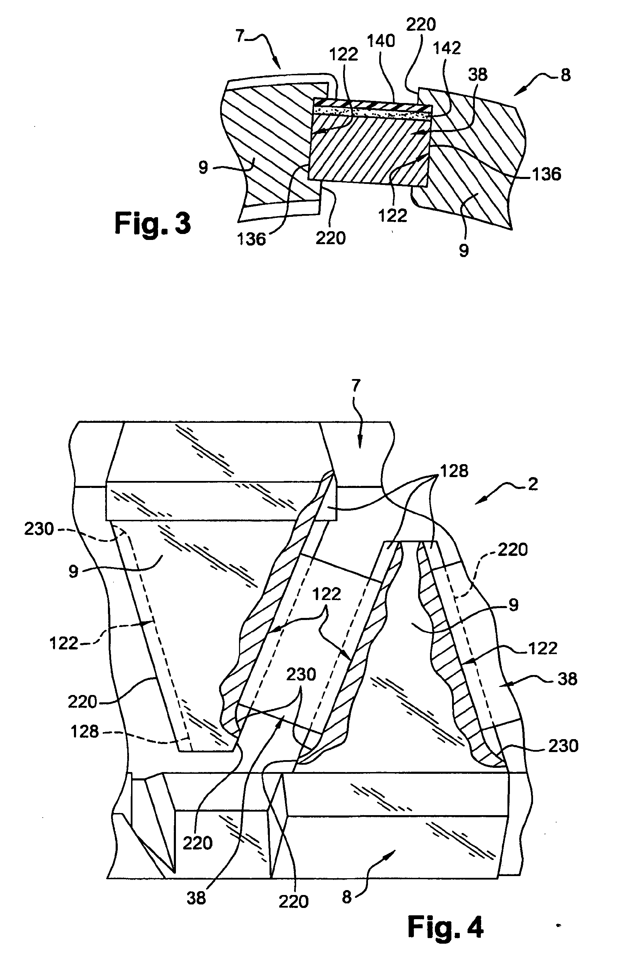

Dans une forme de réalisation (figures 3 et 4) une dent 9 au moins de la roue polaire arrière 7 comporte deux gorges 122, tandis que la dent 9 adjacente de la roue polaire avant 7 présente au moins une gorge 122.

Cela est fonction du nombre de paires d'aimants, qui peut être inférieur au nombre de paires de pôles en sorte qu'une dent 9 de la roue 7 peut ne présenter qu'une gorge. En variante cette dent 9 présente deux gorges.

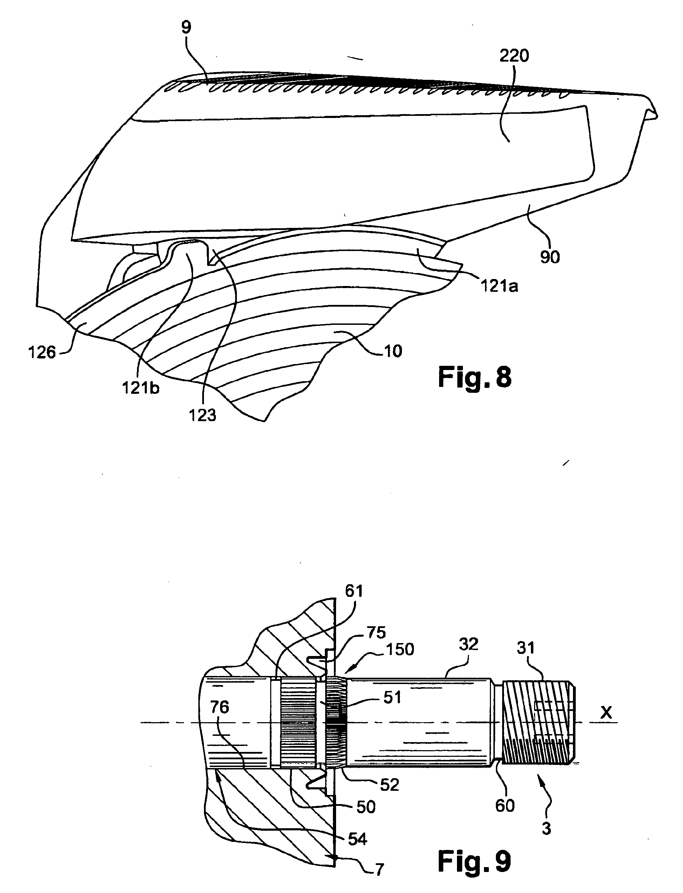

Chaque gorge 122 présente un profil en forme de U et est réalisée dans une face latérale 220 d'une dent. Ces faces latérales 220 sont inclinées comme visible dans les figures 7 et 8. Les faces 220 relient la périphérie externe d'orientation axiale d'une dent 9, à la périphérie interne 90 inclinée de cette même dent 9.

Les gorges 122 sont des gorges de réception des aimants permanents 38, qui sont par exemple du type à terre rare ou en ferrite.

La périphérie interne 90 des dents 9 est également inclinée. Les dents 9 sont plus épaisses à leur base, c'est-à-dire au niveau de leur zone de raccordement aux saillies 19 des flasques des roues 7,8, qu'a leur extrémité libre. Le nombre de dents à gorges dépend du nombre d'aimants. En variante toutes les dents 9 présentent des gorges.
Les gorges 122 présentent un fond plat et deux bords perpendiculaires (figure 3). Les aimants permanents 38 sont ici de forme globalement parallélépipédique et sont montés dans des gorges 122 en étant dimensionnés en fonction des gorges pour pénétrer dans celles-ci.

Ces gorges 122 (figure 4) sont fermées en 230 à la base d'une dent 9 de la roue 8 et ouvertes en 128 à l'extrémité libre de cette dent 9.

En ce qui concerne la dent adjacente 9 de la roue 7, la gorge 122 est fermée en 230 au niveau de l'extrémité libre de la dent 9 et est ouverte en 128 à la base de cette dent 9.

Bien entendu on peut inverser la structure comme visible dans la partie gauche de la figure 4, la gorge 122 de la dent 9 de la roue polaire avant 7 étant fermée en 230 au niveau de la base de cette dent 9 et ouverte en 128 à l'extrémité libre de cette dent 9.

En variante, comme visible à la figure 5, la gorge 122 de la dent 9 de la roue 7 est fermée en 230 à chacune des ses extrémités, c'est-à-dire à la base et à l'extrémité libre de cette dent 9.

Tout cela est possible car les roues polaires et les gorges 122 sont avantageusement usinées par avance de manière précitée, c'est-à-dire avant montage des aimants 38, de l'isolant 11' équipé du bobinage d'excitation 10 et des roues polaires 7, 8 sur l'arbre 3 de manière directe ou indirecte. On peut faire tourner les roues l'une par rapport à l'autre avant la fixation de l'arbre pour les amener dans la bonne position.

Ainsi on usine par avance à l'aide d'un outil, tel qu'une fraise, les gorges 122 concernées de chaque roues 7, 8, c'est-à-dire avant montage du bobinage d'excitation 10 entre les flasques des roues polaires et sur le noyau, en sorte que des copeaux ne risquent pas d'endommager ce bobinage d'excitation non présent à ce stade.

La taille de la fraise d'usinage des gorges des aimants n'est pas limitée car à ce stade les roues polaires sont usinées de manière indépendante.

Ici la périphérie externe des dents comporte des sillons (non référencés) pour diminution des courants de Foucault dans le stator. Ces sillons sont usinés par avance.

Dans les figures 7 à 9 les roues polaires sont fixées sur l'arbre 3 par déformation de matière des roues ; l'arbre 3 étant du type de celui des figures 3 ou 10 du document WO 2008/031995. Par simplicité les références de ce document seront reprises.

La partie avant de l'arbre 3 comprend donc un premier tronçon fileté 31 pour le vissage de l'écrou 160 de la figure 1, une gorge 60, un deuxième tronçon lisse 32, de diamètre supérieur au tronçon 31, pour le montage de la bague interne du roulement avant 19. Le tronçon 32 est prolongé vers l'arrière par une zone de sertissage 150 de diamètre supérieure au diamètre de la zone 32. La zone 150 est scindée en deux parties 50, 52 par une gorge 51 de sertissage permettant un fluage de la matière de la roue polaire avant. Une gorge 61 sépare la partie 50 d'une zone de centrage 54 de diamètre supérieur au diamètre de la zone de sertissage 150. Les parties 50, 52 sont des parties à stries d'orientation axiale. La zone 54 est une zone de centrage pour les demi noyaux des roues polaires en contact intime à leur périphérie interne avec la périphérie externe de la zone 54. Cette zone 54 est prolongée à l'arrière par une deuxième zone de sertissage comprenant une partie à stries d'orientation axiale ou à stries croisées comme respectivement dans les figures 3 et 10 de ce document WO 2008/031995.

Bien entendu en variante on peut faire appel à un arbre à deux zones de sertissage à stries croisées comme à la figure 6 de ce document.

Dans la figure 7 on voit en 13 l'extrémité arrière de diamètre réduit de l'arbre 3. Cette extrémité 13 est moletée ici pour le montage du collecteur rapporté du type de celui du document FR 2 710 197 auquel on se reportera.

Dans la figure 9 on voit en 75 une empreinte de forme annulaire, éventuellement fractionnée, réalisée dans la roue avant. La roue arrière présente également une telle empreinte. L'empreinte 75 est configurée pour la réception d'un outil de forme complémentaire à l'empreinte. Comme décrit dans ce document WO 2008/031995 (figures 5 à 9) à l'aide de l'outil, qui en variante réalise lui-même l'empreinte, on repousse la matière de la roue polaire pour faire fluer cette matière à l'intérieur vers la zone de sertissage concernée et vers la gorge de sertissage associe afin de fixer la roue polaire concernée.

Cette opération est réalisée en final après les opérations d'usinage des roues polaires, de montage de l'isolant du bobinage d'excitation sur les demi noyaux et l'opération de compactage avec possibilité de rotation des roues l'une par rapport à l'autre.
Ainsi dans un mode de réalisation les aimants sont destinés à être montés d'abord sur les dents de la roue polaire avant 7 dont les dents concernées présentent les gorges 122 du type de celle des figures 4 et 5.
Dans cette réalisation, les gorges 122 ayant déjà été usinées dans les roues 7, 8, on monte l'isolant 11' équipé du bobinage d'excitation sur le demi noyau de la roue 7. Lors de cette étape les pétales 131 de la joue avant 130 sont retournés et repliés progressivement par contact avec la périphérie interne inclinée des dents 9. Ces pétales passent de leur position déployée visible à la figure 7, à leur position repliée visible à la figure 1. Ces pétales 131 sont plus large circonférentiellement à leur base que les saillies 19 du flasque transversal et la base d'une dent 9 de la roue avant 7. Dans une deuxième étape on enfile axialement les aimants 38 dans les gorges 122 des dents de la roue 7 et ce de l'avant vers l'arrière, les extrémités ouvertes 128 à la base des dents 9 rendant cela possible. Le mouvement est limité du fait de la présence de l'extrémité fermée en 230 de la gorge 122 au niveau de l'extrémité avant de la dent 9 de la roue 7 comme visible à la figure 4. Lors de ce montage les pétales 131 ne gênent pas car ils sont repliés.

En variante, comme visible à la figure 5, les gorges 122 sont fermées en 230 à chacune de leurs extrémités.

Le montage des aimants étant alors réalisé latéralement et possible compte tenu que la roue arrière 8 n'est pas présente.

En variante comme visible dans la partie gauche de la figure 4, on enfile les aimants d'arrière en avant dans les gorges 122 de la roue 7 ouvertes en 128 au niveau de l'extrémité libre des dents et fermées en 230 au niveau de la base des dents 9.

Ensuite on rapproche axialement la roue polaire arrière 8, avec ses dents usinées comme à la figure 4, par rapport à la roue avant 7 équipées des aimants 38 et de l'isolant 11' dans lequel est bobiné le bobinage 10. Lors de ce rapprochement axial les pétales de la joue arrière 120 ne sont pas encore repliés (Voir figure 6). Ces pétales peuvent interférer avec les aimants 38 lors qu'ils sont repliés progressivement par contact avec la périphérie interne inclinée des dents 9 de la roue 8.
En final les roues polaires sont fixées sur l'arbre 3 par exemple comme dans le document WO 2006/103361.
Dans un autre mode de réalisation on fait l'inverse et l'on monte sur le demi noyau de la roue 8 l'isolant 11' équipé du bobinage 10 et enfin on rapproche la roue avant 7 par rapport à la roue arrière et fixer en final de manière directe ou indirecte cette roue 7 sur l'arbre. Dans ce cas on inverse les structures, les gorges 122 de la roue 8 présentent la forme de celles des gorges de la roue 7 de la figure 4 ou de la figure 5 tandis que les gorges 122 de la roue 7 présentent la forme des gorges de la roue 8.
Les pétales 131 de la joue avant 130 peuvent interférer avec les aimants 38.
Dans ces réalisations, comme visible à la figure 3 et décrit dans le document FR 2 784 248 précité, au moins une lame 140, appelée laminette, en matériau moins dure que l'aimant 38, telle que de la matière plastique préimprégnée dans laquelle sont noyées des fibres de verre, est interposée entre l'aimant et chacune des rainures 122. Une couche de colle 142 plus souple est intercalée entre l'aimant 38 et la lame 140.
Dans un mode de réalisation la lame 140 est à base de Mylar (marque déposée).
En variante il est prévu une autre couche et une autre lame comme à la figure 3 de ce document FR 2 784 248.
Les bords latéraux des aimants en cas de nécessité peuvent être revêtus d'une couche de colle 136 pour leur fixation au fond de la gorge 122.
Cette gorge est en variante en forme de V comme visible à la figure 5 de ce document FR 2 784 248.

Une gorge 122 comporte donc un fond et au moins un bord inférieur. Ce bord inférieur est plus court axialement que le bord supérieur dans le mode de réalisation de la figure 7.

L'aimant est en variante en deux parties et une deux parties comme à la figure 4 de ce document FR 2 784 248.

On peut donc monter les aimants 38 de diverses manières d'abord sur une roue polaire et rapprocher ensuite l'autre roue polaire.

Dans encore un autre mode de réalisation les aimants sont fixés sur les dents 9 de manière indirecte à l'aide d'un support comme dans le document US 6 369 485. Ces aimants sont fixés de part et d'autre d'une dent d'une roue polaire à l'aide d'un support en contact avec la dent concernée et doté de logements pour les aimants comme visible dans les figures 1 à 12 de ce document auquel on se reportera.

En variante , lorsque le nombre de paires d'aimants est inférieur au nombre de paires de pôles, l'une au moins des dents 9 porte un support doté d'un seul logement pour un aimant.

Dans ces cas le support d'au moins un aimant peut empêcher le pétale concerné de se plier.

Les aimants 38 sont donc dans tous les cas portés de manière directe ou indirecte (via un support) par les dents 9 de la roue polaire concernée.

Suivant l'invention l'isolant 11' est configuré pour que ses pétales associés aux aimants puissent se plier sans interférer avec les aimants et/ou les supports des aimants.

Dans le mode de réalisation des figures 6 et 7 ; les pétales 131 de la joue avant 130 sont conservés, tandis que les pétales de la joue arrière 120 associés à la roue arrière 8 sont modifiés pour pouvoir bien se plier et ne pas interférer avec les aimants 38 et /ou les support des aimants portés dans ce mode de réalisation par les gorges des dents 9 de la roue polaire avant 7.
Certains au moins des pétales d'une joue 120, 130 sont selon l'invention scindés en deux parties.

Plus précisément dans un mode de réalisation le nombre de paires d'aimants étant inférieur au nombre de paires de pôles, comme à la figure 2, seul sont modifiés et scindés en deux les pétales, d'une part, associés à la périphérie interne des dents d'une première roue polaire et d'autre part, en vis-à-vis d'un paire d'aimants, portés de manière directe ou indirecte par une dent de l'autre roue polaire.

Les autres pétales sont conservés et ont de préférence la même forme que les pétales 131.

Dans un autre mode de réalisation tous les pétales associés aux dents de la première roue polaire sont modifiés.

Cette disposition permet de standardiser les pétales. En outre cela permet d'avoir un pliage plus homogène des pétales sachant que les pétales scindés en deux sont plus faciles à plier du fait de leur configuration décrite ci-après.

Dans les figures 6 à 8 ce pétale scindé appartient à la joue arrière 120 et comporte un pétale principal 121a et au moins un pétale secondaire latéral 121b, qui est moins haut, vu dans le sens radial, que le pétale principal 121a.

En effet compte tenu que dans un mode de réalisation le nombre de paire d'aimants 38 est inférieur au nombre de pôles, un pétale scindé peut se trouver en vis-à-vis seulement d'un aimant 38 porté par une dent 9 de la roue polaire avant 7 en sorte qu'un seul pétale secondaire est nécessaire.

Bien entendu en variante, lorsqu'une dent de l'autre roue polaire porte sur chacune de ses faces latérales un aimant 38, on prévoit un pétale secondaire 121b de part et d'autre d'un pétale principal 121a.
Ces pétales 121a et 121b sont séparés l'un de l'autre par une fente 123 (Figure 6) ce qui permet de rendre plus indépendant le pétale secondaire 121b, celui-ci n'étant pas influencé par le pliage du pétale principal 121a.

Dans le mode de réalisation des figures 6 à 8 il est prévu un pétale secondaire latéral 121b de part et d'autre d'un pétale principal 121a. Une bande matière 126 relie deux pétales 121b consécutifs. Cette bande 126 et ces deux pétales 121b sont circonférentiellement intercalés entre deux dents 9 consécutives de la roue 8. L'un des pétales 121b est adjacent à l'une des faces latérales d'une dent 9 de la roue 8, tandis que l'autre pétale 121b est adjacent à la face latérale de l'autre dent 9 consécutive de la roue 8.

Les pétales 121b sont saillants globalement radialement à l'état libre par rapport à la bande de matière 126 en forme de secteur annulaire. La bande de matière 126 se raccorde à la périphérie externe de la joue 120 et permet de stabiliser les pétales 121b et de rendre ceux-ci moins sensibles à la déformations des pétales principaux 121a. En outre cela assure une bonne protection et une bonne isolation électrique du bobinage 10.

Le pétale principal 121a, saillant globalement radialement à l'état libre en étant incliné axialement en direction de la roue polaire concernée 8 de manière précitée, est ici de forme globalement trapézoïdale. Sa grande base 124 se raccorde à la périphérie externe de la joue avant 120 d'orientation transversale en sorte qu'elle est enracinée dans cette joue avant 120. L'angle d'inclinaison d'un pétale 121a à l'état libre par rapport à un plan transversal est ici globalement de 10°. Cet angle dépend des applications et permet de bien bobiner le bobinage 10 sans être gêné par les pétales 121a.

Sa petite base 125 est configurée pour venir par pliage en contact avec la périphérie interne de la dent concernée

La taille (la dimension) du pétale 121a est fonction de la taille (de la dimension) de la périphérie interne 90, inclinée et globalement de forme trapézoïdale, de la dent 9.

La largeur des bases 124, 125 est déterminée par la dimension de la périphérie interne 90 de la dent 9.

Cela est fonction des applications. Comme visible à la figure 8, la taille du pétale 121a est déterminée afin que ce pétale recouvre en final au moins une partie de la périphérie interne 90 de la dent 9 de préférence sans déborder du contour de cette périphérie 90.

Ce pétale 121a masque la base de cette dent 9 et est plus facile à plier que le pétale 131 car sa base 124 est moins large circonférentiellement que la base du pétale 131. Sa petite base 125 est dans un mode de réalisation de largeur circonférentielle globalement égale à celle de la petite base du pétale 131 également globalement de forme trapézoïdale.

Les pétales secondaires 121b ont une hauteur, vue dans le sens radial, inférieure à la hauteur, vue dans le sens radial, du pétale principale 121a.

La hauteur radiale du pétale 121b est fonction de distance radiale par rapport à l'axe X-X du bord inférieur de l'encoche 122 ou de la distance radiale par rapport à l'axe X-X de la périphérie interne du support des aimants, par exemple du type de celui des figures 1 à 12 et 19 du document US 6 369 485.

Plus précisément le bord supérieur du pétale 121b est implanté ici sur une circonférence, d'une part, de rayon inférieur à la distance radiale du bord inférieur de la gorge 122 par rapport à l'axe X-X et d'autre part, de rayon supérieur à celui de la périphérie externe de la bande de matière 126.

La gorge pouvant être en variante en forme de V, dans tous les cas le pétale secondaire 121b est plus proche de l'axe X-X du rotor 2 que le bord inférieur de la gorge 122.

De même la dent associée de l'autre roue polaire portant en variante un support d'au moins un aimant, dans tous les cas le pétale secondaire 121b est plus proche de l'axe X-X que le support de l'aimant permanent 38.

Ici la hauteur, vue dans le sens radial, du pétale 121b est inférieure au tiers de la hauteur, vue dans le sens radial, du pétale principale 121a.

Les pétales 121b sont implantés à la base des dents 9 et ce de manière adjacente aux saillies 19 associées du flasque de la roue 8, plus précisément à la face interne des saillis 19 tournées ici vers le flasque de la roue 7.

Les pétales secondaires 121b débordent circonférentiellement par rapport à la base de la dent 9 (Figure 8).

Les pétales 121b, en combinaison avec la bande 126, permettent donc une bonne isolation électrique du bobinage 10 par rapport aux saillies 19 et à la base des dents 9.

Les pétales 121a isolent électriquement le bobinage 10 par rapport à la périphérie interne des dents 9

En considérant un pétale scindé comprenant un pétale principale 121a et deux pétales secondaires 121b disposés de part et d'autre du pétale principale avec présence de fentes 123 entre chaque pétale 121b et le bord latéral concerné du pétale 121a, la largeur circonférentielle de ce pétale scindé est globalement égale à la largeur circonférentielle de la grande base du pétale 131.

Bien entendu lorsque l'on inverse les structures et que l'on monte les aimants d'abord sur la roue polaire arrière 8; la joue avant 130 est équipée des pétales scindés selon l'invention.
Dans un mode de réalisation on modifie également les pétales 131.
Ainsi en variante les pétales 131 sont remplacés par des pétales scindés 121a, 121b à fentes 123. Dans ce cas les pétales sont inclinés en direction de la roue polaire 7, l'angle d'inclinaison par rapport à un plan transversal étant ici de 10°.
Cela permet de standardiser l'isolant 11' et d'éviter les erreurs de montage, notamment d'inversion. Plus précisément lorsque l'on monte d'abord les aimants 38 sur la roue avant 7, cela évite d'associer par erreur les pétales scindés à cette roue et les pétales 131 à la roue arrière.
Cet isolant standardisé convient au montage par avance des aimants 38 sur l'une quelconque des roues 7, 8.
Bien entendu en final on peut monter l'arbre sur un manchon intermédiaire ou un noyau épaulé pour créer un sous ensemble et assembler ensuite les roues polaires à ce sous ensemble comme décrit dans le document WO 2006/103361 précité.
En variante, à la lumière du document DE 30 08 454, le noyau peut être en une seule partie et on peut monter les aimants sur l'une des roues et ensuite rapprocher le noyau équipé de l'isolant 11' muni du bobinage 10 et enfin la deuxième roue polaire. En final on fixe l'arbre par fluage de matière des flasques des roues polaires comme par exemple dans les figures 6 et 7 de ce document.

Cet isolant 11' de support du bobinage d'excitation 10 bobiné dans l'isolant, qui dans les figures 6 à 9 selon l'invention est en forme de bobine, peut donc être monté en lieu et place de celui des documents WO 2008/031995, WO 2006/103361 et DE 30 08 454 permettant un usinage préalable des roues polaires et un montage préalable des aimants.

L'isolant 11' selon l'invention permet de réaliser les étapes d'assemblage de manière différente en considérant les modes de réalisation des documents WO 2008/031995, WO 2006/103361 et DE 30 08 454.

Par exemple la configuration de l'isolant 11' permet de monter par avance les aimants, dont le nombre dépend des applications, sur une première des roues 7, 8 usinée.

Après on fixe la deuxième roue sur l'arbre et ensuite on monte sur le demi noyau de cette roue l'ensemble isolant 11' - bobinage 10.

Puis on rapproche axialement la première roue à aimants de la deuxième roue et de l'ensemble 11'-10 et ce dans la bonne position pour réaliser un compactage des demi noyaux. Enfin on fixe cette première roue polaire.

Bien entendu en variante on peut monter en final les aimants sur les roues fixées sur l'arbre.

Dans encore une autre variante l'arbre présente une portion moletée saillante et une zone de sertissage.

Ainsi on monte par avance les aimants sur une première des roues 7, 8 usinée.

Après on fixe la deuxième roue sur la portion moletée de l'arbre et on usine la deuxième roue, notamment les gorges de montage des aimants et la périphérie externe de cette roue.
Ensuite on monte sur le demi noyau de cette roue l'ensemble isolant 11'- bobinage 10.

Puis on rapproche axialement la première roue à aimants de la deuxième roue usinée et de l'ensemble 11'-10 et ce dans la bonne position pour réaliser un compactage des demi noyaux.

Enfin on fixe cette première roue polaire sur la zone de sertissage de l'arbre par déformation de matière de cette deuxième roue.
On appréciera que l'on peut diminuer le diamètre externe du rotor grâce à l'isolant 11'.

En outre de nombreux montages des aimants de manière directe ou indirecte sur les dents des roues polaires sont envisageables.
De plus on peut augmenter l'épaisseur des dents et donc la longueur axiale du bord inférieur des gorges 122.
Dans l'exemple de réalisation représenté dans les figures l'isolant 11' est continu. En variante, comme décrit dans le document US 2003/0137208 précité, il est fendu.

## Revendications

1. Rotor à griffes (2), notamment pour un alternateur ou un alterno-démarreur de véhicule automobile, comportant un axe de symétrie axiale (X-X), deux roues polaires (7, 8) comprenant chacune un flasque portant des saillies (19) prolongées par des dents (9) d'orientation axiale dirigées vers le flasque de l'autre roue polaire (8, 7), un noyau intercalé entre les flasques des roues polaires (7, 8), un isolant (11') d'un bobinage d'excitation (10) monté sur le noyau et des aimants permanents (38) montés entre deux dents (9) adjacentes appartenant à l'une et à l'autre des roues polaires (7, 8), dans lequel l'isolant (11') comporte un moyeu (110), monté sur le noyau, et une joue (130, 120) à chacune des extrémités du moyeu (110), chaque joue (120, 130) portant sur sa périphérie une pluralité de pétales (121, 131) saillants radialment, avant le montage dudit isolant (11') sur le noyau destinés à coopérer pendant ledit montage avec la périphérie interne inclinée (90) d'une dent (9), **caractérisé en ce qu'**au moins les pétales d'une joue (120, 130) sont scindés en plusieurs parties à savoir un pétale principal (121a) pour venir en contact avec la périphérie interne (90) d'une dent (9) de la roue polaire (7, 8) concernée et être plié pendant ledit montage et au moins un pétale secondaire adjacent (121b) associé au aimant permanent (38) étant avant ledit montage moins haut, vu dans le sens radial, que le pétale principal (121a).

2. Rotor selon la revendication 1, **caractérisé en ce que** une fente (123) sépare le pétale principal (121a) du pétale secondaire (121b).

3. Rotor selon la revendication 2, **caractérisé en ce qu'**il est prévu un pétale secondaire (121b) de part et d'autre d'un pétale principal (121a) avec intervention d'une fente (123) entre chaque pétale secondaire (121b) et le pétale principale (121a).

4. Rotor selon la revendication 3, **caractérisé en ce que** une bande de matière (126) relie entre eux deux pétales secondaires (121b) intercalés circonférentiellement entre deux dents consécutives d'une même roue polaire (7, 8).

5. Rotor selon la revendication 4, **caractérisé en ce que** les pétales secondaires (121b) sont saillants par rapport à la bande de matière (126), qui se raccorde à la périphérie externe de la joue (120) concernée.

6. Rotor selon l'une quelconque des revendications précédentes, **caractérisé en ce que** la taille du pétale principal (121a) est déterminée par la dimension de la périphérie interne (90) globalement de forme trapézoïdale de la dent (9) concernée.

7. Rotor selon la revendication 6, **caractérisé en ce que** le pétale principale (121a) est globalement de forme trapézoïdale et est doté d'une petite base (125) configurée pour venir en contact avec la périphérie interne (90) de la dent (9) concernée et **en ce que** la grande base (124) du pétale principal (121a) se raccorde à la périphérie externe de la joue (120) concernée.

8. Rotor selon l'une quelconque des revendications précédentes, **caractérisé en ce que** le pétale secondaire latéral (121b) est implanté à la base d'une dent (9) et déborde circonférentiellement par rapport à la base de cette dent (9).

9. Rotor selon la revendication 8, **caractérisé en ce que** la dent (9) concernée comporte latéralement une gorge (122) avec un bord inférieur et **en ce que** le pétale secondaire (121b) est plus proche de l'axe (X-X) du rotor (2) que le bord inférieur de la gorge (122).

10. Rotor selon la revendication 9, **caractérisé en ce que** la dent (9) concernée de l'autre roue polaire (8, 7) porte un support pour le montage d'au moins un aimant (38) et **en ce que** le pétale secondaire (121b) est plus proche de l'axe du rotor que le support de l'aimant (38).

11. Rotor selon l'une quelconque des revendications précédentes, **caractérisé en ce que** tous les pétales (121a, 121b) d'une même joue (120, 130) sont scindés en deux parties.

12. Rotor selon l'une quelconque des revendications précédentes, **caractérisé en ce que** tous les pétales (121a, 121b) des deux joues (120, 130) sont scindés en deux parties.

13. Machine électrique tournante, **caractérisée en ce qu'**elle est équipée d'un rotor à griffes selon l'une quelconque des revendications 1 à 12.

14. Machine électrique tournante selon la revendication 13, **caractérisée en ce qu'**elle consiste en un alternateur ou en un alterno-démarreur.

15. Machine électrique tournante selon la revendication 13 ou 14, **caractérisé en ce que** les roues polaires (7, 8) sont montées de manière directe sur un arbre (3) présentant pour ce faire des zones de sertissage (150).

16. Machine électrique tournante selon la revendication 13 ou 14, **caractérisé en ce que** les roues polaires (7, 8) sont montées de manière indirecte sur un arbre (3).

## Patentansprüche

1. Klauenrotor (2), insbesondere für eine Lichtmaschine oder eine Kraftfahrzeug-Anlasser-Lichtmaschine, umfassend eine Axialsymmetrieachse (X-X), zwei Polräder (7, 8), die jeweils einen Flansch aufweisen, der durch Zähne (9) mit axialer Ausrichtung, die zu dem Flansch des anderen Polrads (8, 7) ausgerichtet sind, verlängerte Vorsprünge (19) trägt, einen zwischen den Flanschen der Polräder (7, 8) angeordneten Kern, einen Isolierkörper (11') einer Erregerspule (10), der an dem Kern angebracht ist, und Permanentmagneten (38), die zwischen zwei benachbarten Zähnen (9) angebracht sind, welche zu dem einen und dem anderen der Polräder (7, 8) gehören, wobei der Isolierkörper (11') eine Nabe (110), die an dem Kern angebracht ist, und eine Wange (130, 120) an jedem der Enden der Nabe (110) aufweist, wobei jede Wange (120, 130) an ihrem Umfang mehrere radial vorstehende Lappen (121, 131) aufweist, die vor der Montage des Isolierkörpers (11') an dem Kern während der Montage mit dem geneigten Innenumfang (90) eines Zahns (9) zusammenwirken sollen, **dadurch gekennzeichnet, dass** mindestens die Lappen einer Wange (120, 130) in mehrere Teile, nämlich einen Hauptlappen (121a) zum Inkontakttreten mit dem Innenumfang (90) eines betreffenden Zahns (9) des betreffenden Polrads (7, 8), der während der Montage umgebogen wird, und mindestens einen benachbarten Nebenlappen (121b), der dem Permanentmagneten (38) zugeordnet ist und der vor der Montage mit Blickrichtung in Radialrichtung weniger hoch ist als der Hauptlappen (121a), unterteilt sind.

2. Rotor nach Anspruch 1, **dadurch gekennzeichnet, dass** ein Schlitz (123) den Hauptlappen (121a) vom Nebenlappen (121b) trennt.

3. Rotor nach Anspruch 2, **dadurch gekennzeichnet, dass** ein Nebenlappen (121b) auf beiden Seiten eines Hauptlappens (121a) mit einem Schlitz (123) zwischen jedem Nebenlappen (121b) und dem Hauptlappen (121a) vorgesehen ist.

4. Rotor nach Anspruch 3, **dadurch gekennzeichnet, dass** ein Materialband (126) zwei Nebenlappen (121b), die um den Umfang zwischen zwei aufeinander folgenden zähnen eines gleichen Polrads (7, 8) angeordnet sind, miteinander verbindet.

5. Rotor nach Anspruch 4, **dadurch gekennzeichnet, dass** die Nebenlappen (121b) bezüglich des Materialbands (126) vorragen, das mit dem Außenumfang der betreffenden Wange (120) verbunden ist.

6. Rotor nach einem der vorhergehenden Ansprüche, **dadurch gekennzeichnet, dass** die Größe des Hauptlappens (121a) durch die Abmessung des Innenumfangs (90) mit allgemein trapezförmiger Gestalt des betreffenden Zahns (9) bestimmt wird.

7. Rotor nach Anspruch 6, **dadurch gekennzeichnet, dass** der Hauptlappen (121a) eine allgemein trapezförmige Gestalt aufweist und mit einer kleinen Basis (125) versehen ist, die dazu konfiguriert ist, mit dem Innenumfang (90) des betreffenden Zahns (9) in Kontakt zu treten, und dass die große Basis (124) des Hauptlappens (121a) mit dem Außenumfang der betreffenden Wange (120) verbunden ist.

8. Rotor nach einem der vorhergehenden Ansprüche, **dadurch gekennzeichnet, dass** der laterale Nebenlappen (121b) am Fuß eines Zahns (9) angebracht ist und um den Umfang bezüglich des Fußes dieses Zahns (9) hinausragt.

9. Rotor nach Anspruch 8, **dadurch gekennzeichnet, dass** der betreffende Zahn (9) lateral eine Kehle (122) mit einem unteren Rand aufweist und dass der Nebenlappen (121b) näher zur Achse (X-X) des Rotors (2) liegt als der untere Rand der Kehle (122).

10. Rotor nach Anspruch 9, **dadurch gekennzeichnet, dass** der betreffende Zahn (9) des anderen Polrads (8, 7) einen Träger für die Montage mindestens eines Magneten (38) trägt und dass der Nebenlappen (121b) näher an der Achse des Rotors liegt als der Träger des Magneten (38).

11. Rotor nach einem der vorhergehenden Ansprüche, **dadurch gekennzeichnet, dass** alle Lappen (121a, 121b) einer gleichen Wange (120, 130) in zwei Teile unterteilt sind.

12. Rotor nach einem der vorhergehenden Ansprüche, **dadurch gekennzeichnet, dass** alle Lappen (121a, 121b) der beiden Wangen (120, 130) in zwei Teile unterteilt sind.

13. Rotierende elektrische Maschine, **dadurch gekennzeichnet, dass** sie mit einem Klauenrotor nach einem der Ansprüche 1 bis 12 ausgestattet ist.

14. Rotierende elektrische Maschine nach Anspruch 13, **dadurch gekennzeichnet, dass** sie aus einer Lichtmaschine und einer Anlasser-Lichtmaschine besteht.

15. Rotierende elektrische Maschine nach Anspruch 13 oder 14, **dadurch gekennzeichnet, dass** die Polräder (7, 8) direkt auf einer Welle (3) angebracht sind, die dazu Quetschzonen (150) aufweist.

16. Rotierende elektrische Maschine nach Anspruch 13 oder 14, **dadurch gekennzeichnet, dass** die Polräder (7, 8) indirekt auf einer Welle (3) angebracht sind.

## Claims

1. Claw rotor (2), in particular for a motor vehicle alternator or alternator-starter, comprising an axis of axial symmetry (X-X), two pole wheels (7, 8) each comprising a flange bearing projections (19) prolonged by axially oriented teeth (9) directed toward the flange of the other pole wheel (8, 7), a core interposed between the flanges of the pole wheels (7, 8), an insulator (11') for a field coil (10) mounted on the core and permanent magnets (38) mounted between two adjacent teeth (9) belonging to each of the two pole wheels (7, 8), in which the insulator (11') comprises a hub (110) mounted on the core and a cheek (130, 120) at each end of the hub (110), each cheek (120, 130) bearing on its periphery, before said insulator (11') is mounted on the core, a plurality of radially projecting lobes (121, 131) designed to engage during said mounting with the inclined internal periphery (90) of a tooth (9), **characterized in that** at least the lobes of one cheek (120, 130) are split into several portions, specifically a main lobe (121a) to come into contact with the internal periphery (90) of a tooth (9) of the pole wheel (7, 8) in question and to be bent during said mounting and at least one adjacent secondary lobe (121b) associated with the permanent magnet (38) being, before said mounting, smaller as seen in the radial direction than the main lobe (121a).

2. Rotor according to Claim 1, **characterized in that** a slit (123) separates the main lobe (121a) from the secondary lobe (121b).

3. Rotor according to Claim 2, **characterized in that** a secondary lobe (121b) is provided on either side of a main lobe (121a), with a slit (123) being present between each secondary lobe (121b) and the main lobe (121a).

4. Rotor according to Claim 3, **characterized in that** a strip of material (126) connects, to each other, two secondary lobes (121b) which are interposed in the circumferential direction between two consecutive teeth of one and the same pole wheel (7, 8).

5. Rotor according to Claim 4, **characterized in that** the secondary lobes (121b) project relative to the strip of material (126) which connects to the external periphery of the cheek (120) in question.

6. Rotor according to any one of the preceding claims, **characterized in that** the size of the main lobe (121a) is determined by the dimension of the internal periphery (90), of trapezoidal overall shape, of the tooth (9) in question.

7. Rotor according to Claim 6, **characterized in that** the main lobe (121a) is of trapezoidal overall shape and has a small base (125) configured so as to come into contact with the internal periphery (90) of the tooth (9) in question and **in that** the large base (124) of the main lobe (121a) connects to the external periphery of the cheek (120) in question.

8. Rotor according to any one of the preceding claims, **characterized in that** the lateral secondary lobe (121b) is sited at the base of a tooth (9) and projects circumferentially beyond the base of this tooth (9).

9. Rotor according to Claim 8, **characterized in that** the tooth (9) in question comprises on the side a channel (122) with a lower edge and **in that** the secondary lobe (121b) is closer to the axis (X-X) of the rotor (2) than the lower edge of the channel (122).

10. Rotor according to Claim 9, **characterized in that** the tooth (9) in question of the other pole wheel (8, 7) bears a support for mounting at least one magnet (38) and **in that** the secondary lobe (121b) is closer to the axis of the rotor than the magnet (38) holder.

11. Rotor according to any one of the preceding claims, **characterized in that** all the lobes (121a, 121b) of one and the same cheek (120, 130) are split into two portions.

12. Rotor according to any one of the preceding claims, **characterized in that** all the lobes (121a, 121b) of the two cheeks (120, 130) are split into two portions.

13. Rotating electric machine, **characterized in that** it is fitted with a claw rotor according to any one of Claims 1 to 12.

14. Rotating electric machine according to Claim 13, **characterized in that** it consists of an alternator or an alternator-starter.

15. Rotating electric machine according to Claim 13 or 14, **characterized in that** the pole wheels (7, 8) are mounted directly on a shaft (3) having crimping regions (150) for this purpose.

16. Rotating electric machine according to Claim 13 or 14, **characterized in that** the pole wheels (7, 8) are mounted indirectly on a shaft (3)
